# EUROPÄISCHE PATENTSCHRIFT

(11) **EP 0 651 178 B1**
(45) Veröffentlichungstag und Bekanntmachung des Hinweises auf die Patenterteilung: **15.01.1997**
(21) Anmeldenummer: 94116277.8
(22) Anmeldetag: 15.10.1994
(51) Int. Cl.: F16G 3/04

(54) **Riemenverbinder**
Belt fastener
Dispositif de jonction de courroie

(30) Priorität: 29.10.1993 DE 4336999; 07.09.1994 DE 4431835
(43) Veröffentlichungstag der Anmeldung: 03.05.1995
(73) Patentinhaber: GORO S.A., F-30340 Saint Privat des Vieux (FR)
(72) Erfinder: Schick, Jean-Francois, F 34980 Monteferrier/Lez (FR)
(74) Vertreter: Honke, Manfred, Dr.-Ing.

(56) Entgegenhaltungen:
- EP-A- 0 437 639
- EP-A- 0 477 469
- DE-C- 927 316
- FR-A- 1 233 111
- FR-A- 1 313 652
- FR-A- 2 116 609
- FR-A- 2 701 300
- GB-A- 651 409

## Beschreibung

Die Erfindung betrifft einen Riemenverbinder mit in Reihe angeordneten Verbinderklammern zum Verbinden der Bandenden von Transportbändern, wobei die Verbinderklammern in Seitenansicht U-förmig ausgebildet sind, wobei ferner die Verbinderklammern Scharnierbögen und die Scharnierbögen auf ihrer Innenseite eine Auskleidung aus Verschleißmaterial mit einem geringen Reibungskoeffizienten aufweisen, und wobei die Scharnierbögen einen flachen U-förmigen Querschnitt mit nach innen umgebogenen U-Schenkeln besitzen.

Bei mittels Riemenverbinder verbundenen Bandenden von Transportbändern greifen die Scharnierbögen der Riemenverbinder bzw. ihrer Verbinderklammern scharnierartig ineinander und nehmen einen gemeinsamen Kupplungsstab auf. Unter Berücksichtigung der Tatsache, daß der durch die Scharnierbögen hindurchgeführte Kupplungsstab ebenso wie die Verbinderklammern und folglich ihre Scharnierbögen aus korrosionsbeständigem Stahl bestehen, treten extrem hohe Reibungskräfte zwischen dem Kupplungsstab und den Scharnierbögen auf. Denn korrosionsbeständiger Stahl besitzt einen verhältnismäßig hohen Reibungskoeffizienten. Aus diesen Reibungskräften resultiert ein extrem hoher Verschleiß insbesondere der Scharnierbögen, der schließlich zu einer Beschädigung der Scharnierbögen und schließlich der gesamten Transportbandverbindung führen kann. Aus einer solchen Beschädigung der Transportbandverbindung wiederum resultieren kostenaufwendige Reparaturarbeiten und Betriebsstörungen, die möglichst vermieden werden müssen.

Aus der FR-A-2 116 609 ist ein Riemenverbinder bekannt, bei welchem die Verbinderklammern von einem Gewebe umgeben sind. Zusätzlich weisen die Scharnierbögen eine Verstärkung im Bogenbereich auf. Der bekannte Riemenverbinder hat sich in der Vergangenheit bewährt, allerdings ist das bekannte Überziehen der Verbinderklammern mit dem Gewebe bzw. Textilgewebe in fertigungstechnischer Hinsicht aufwendig und gewährleistet keine einwandfreie Fixierung des Verschleißmaterials, welches im übrigen nur im Bereich der Scharnierbögen benötigt wird.

Vergleichbares gilt für die aus der GB-A-651 409 bekannte Ausführungsform, bei welcher in die Scharnierbögen eine ringförmige Auskleidung aus Verschleißmaterial eingesetzt ist. Auch hier ist die Fixierung der buchsenartigen Verschleißauskleidung im Bereich der Scharnierbögen problematisch.

Ähnlich liegen die Verhältnisse bei dem Riemenverbinder nach FR-A-2 701 300. Denn hier weisen die Scharnierbögen einen innenseitig konkaven Querschnitt mit einer darin eingesetzten Auskleidung aus Verschleißmaterial auf. Dabei ist die Auskleidung mehr oder weniger ringförmig gestaltet. Auch für die hieraus bekannten Ausführungsformen gilt, daß keine hinreichende Verankerung des Scharniermaterials in den Scharnierbögen gewährleistet ist. Denn die in die Scharnierbögen eingezogene Aufnahme oder ausgeformte Anpassung der Scharnierbögen an das entsprechend eingeformte Auskleidungsmaterial ermöglicht keine hinreichende Verankerung des Scharniermaterials in den Scharnierbögen.

Endlich lehrt die EP-A-477 469 einen derartigen Riemenverbinder bzw. dessen Herstellung. Bei diesem Riemenverbinder ist die Innenfläche eines jeden Scharniergelenkteils bzw. Scharnierbogens durch zwei nebeneinander angeordnete Metallbänder verstärkt. Folglich weisen die Scharnierbögen einen flachen U-förmigen Querschnitt mit nach innen umgebogenen U-Schenkeln auf.

Der Erfindung liegt die Aufgabe zugrunde, einen Riemenverbinder der eingangs beschriebenen Ausführungsform zu schaffen, bei welchem eine optimale Fixierung der Auskleidung in den Scharnierbögen erreicht wird.

Zur Lösung dieser Aufgabe lehrt die Erfindung bei einem gattungsgemäßen Riemenverbinder, daß die Auskleidung auf der Innenseite der Scharnierbögen zwischen der U-Basis und den umgebogenen U-Schenkeln fixiert ist. - Diese Maßnahmen der Erfindung haben zunächst einmal zur Folge, daß die Reibungskräfte zwischen den Scharnierbögen und dem Kupplungsstab erheblich reduziert werden. In diesem Zusammenhang stört nicht, daß die Auskleidung der Scharnierbögen aus Verschleißmaterial besteht. Abgesehen davon, daß es sich insoweit um ein besonders verschleißfestes Material handeln kann, kann der Verschleiß der Auskleidung schon deshalb in Kauf genommen werden, weil die Scharnierbögen selbst von diesem Verschleiß unberührt bleiben und folglich stets in der Lage sind, die angreifenden Beanspruchungen einwandfrei aufzunehmen. Abgesehen davon wird der Verschleiß selbst infolge der reduzierten Reibungskräfte erheblich herabgesetzt. Aus diesem Grunde wird eine sehr viel höhere Lebensdauer als bisher für den erfindungsgemäßen Riemenverbinder erreicht, so daß gravierende Reparaturarbeiten und Betriebsstörungen nicht länger zu befürchten sind. Dadurch, daß die Auskleidung auf der Innenseite der Scharnierbögen zwischen der U-Basis und den umgebogenen U-Schenkeln fixiert ist, wird erreicht, daß die Auskleidung gleichsam eingeklemmt ist.

Weitere vorteilhafte Ausgestaltungen der Erfindung sind im folgenden aufgeführt. So kann die Auskleidung aus einer Metallegierung, z. B. Kupferlegierung wie Bronze (Cu-Sn-Legierung) bestehen. Selbstverständlich sind auch andere Metallegierungen denkbar, die sich durch einen niedrigen Reibungskoeffizienten auszeichnen und zur Auskleidung der Scharnierbögen geeignet sind. Die Auskleidung der Scharnierbögen kann erfindungsgemäß aber auch aus einem Kunststoff, z. B. Polytetrafluorethylen bestehen, welcher sich durch gute Schmiereigenschaften auszeichnet.

Sofern in den Riemenverbinder bzw. seine in Reihe angeordneten Verbinderklammern ein Dichtungsprofil zur Abdichtung der Scharnierbögen und eines gemeinsamen Kupplungsstabes für die gelenkig ineinandergreifenden Scharnierbögen von zwei Riemenverbindern eingesetzt ist, lehrt die Erfindung mit selbständiger Bedeutung, daß die Auskleidung bzw. Auskleidungen der Scharnierbögen an das Dichtungsprofil anschließen. Nach einer Ausführungsform von besonderer erfinderischer Bedeutung sind die Auskleidungen und das Dichtungsprofil als einteiliges Bauteil ausgebildet, zum Beispiel als einteiliges Formteil hergestellt. Es kann aber auch zwischen den Auskleidungen und dem Dichtungsprofil eine Adhäsivverbindung im Wege der Vulkanisierung des Verklebens oder des Verschweißens verwirklicht sein. Zur Herstellung eines einstückigen Formteiles ist eine Auskleidung aus Kunststoff besonders geeignet, weil auch das Dichtungsprofil aus Kunststoff, nämlich weichelastischem und folglich gummiartigem Kunststoff bestehen kann.

Eine optimale Fixierung der Auskleidung in den Scharnierbögen wird weiter dann erreicht, wenn die Auskleidung mit einem T-förmigen Ansatz die nach innen umgebogenen U-Schenkel der Scharnierbögen hintergreift. Ferner empfiehlt die Erfindung, daß die Auskleidung die jeweils beiden Seitenflächen der Scharnierbögen übergreift. Auf diese Weise wird auch zwischen den scharnierartig ineinandergreifenden Scharnierbögen eine Reibungsminderung und folglich erhöhte Leichtgängigkeit erreicht, während sonst und folglich bei herkömmlichen Reibungsverhältnisses infolge der angreifenden Querkräfte frühzeitiger Verschleiß der Scharnierbögen selbst im Bereich der Seitenflächen in Kauf genommen werden muß.

Im Rahmen der Erfindung besteht auch die Möglichkeit, daß die Auskleidung mittels einer Adhäsivverbindung auf der Innenfläche und gegebenenfalls auf den Seitenflächen der Scharnierbögen befestigt ist, zum Beispiel im Wege eines Verklebens, einer Auftragschweißung oder dergleichen.

Nach einem anderen Vorschlag mit selbständiger Bedeutung lehrt die Erfindung bei einem gattungsgemäßen Riemenverbinder, daß die Scharnierbögen auf ihrer Außenseite oder Innenseite einen sich über einen vorgegebenen Bogenbereich erstreckenden Verstärkungswulst aufweisen. - Diese Maßnahmen der Erfindung haben zur Folge, daß eine Deformation der Scharnierbögen praktisch ausgeschlossen wird, die Scharnierbögen vielmehr stets ihren ursprünglichen Biegeradius beibehalten und folglich auch die ursprüngliche geometrische Symmetrie zwischen den Scharnierbögen und dem gemeinsamen Kupplungsstab dauerhaft erhalten bleibt. Dadurch wird eine beachtliche Reduzierung der Hertz'schen Flächenpressung und der sonst auftretenden Reibungsbeanspruchungen erreicht. Daraus folgt ferner, daß der Verschleiß und die Neigung zum Warmfressen erheblich herabgesetzt und die Lebensdauer der Riemenverbinder bzw. seiner Verbinderklammern beachtlich erhöht werden, so daß gravierende Reparaturarbeiten und Betriebsstörungen nicht länger zu befürchten sind. Vorzugsweise ist der Verstärkungswulst im Bereich der Scharnierbögen als ein nach außen oder innen ausgeformter Wulst ausgebildet, läßt sich also in fertigungstechnischer Hinsicht in verhältnismäßig einfacher Weise verwirklichen.

Im folgenden wird die Erfindung anhand einer lediglich ein Ausführungsbeispiel darstellenden Zeichnung näher erläutert; es zeigen:
- Fig. 1: teilweise einen Riemenverbinder in perspektivischer Darstellung mit einem quergeschnittenen Scharnierbogen ohne Auskleidung,
- Fig. 2: den Gegenstand nach Fig. 1 mit einer erfindungsgemäßen Auskleidung,
- Fig. 3: den Gegenstand nach Fig. 2 in Seitenansicht mit einem eingesetzten Kupplungsstab,
- Fig. 4: einen erfindungsgemäßen Riemenverbinder mit einem eingesetzten Dichtungsprofil und Kupplungsstab und einer an das Dichtungsprofil anschließenden Auskleidung,
- Fig. 5: die Auskleidung und das Dichtungsprofil als einstückiges Formteil in angedeuteter perspektivischer Darstellung,
- Fig. 6: einen Querschnitt durch den Scharnierbogen einer Verbinderklammer mit einer Auskleidung, welche die beiden Seitenflächen des Scharnierbogens übergreift,
- Fig. 7: die Verbindungsklammer eines erfindungsgemäßen Riemenverbinders anderer Ausführungsform in perspektivischer Darstellung,
- Fig. 8: den Gegenstand nach Fig. 7 in Seitenansicht mit einem Kupplungsstab und eingesetzen Befestigungskrampen und
- Fig. 9: einen Querschnitt durch den Scharnierbogen des Gegenstandes nach Fig. 7.

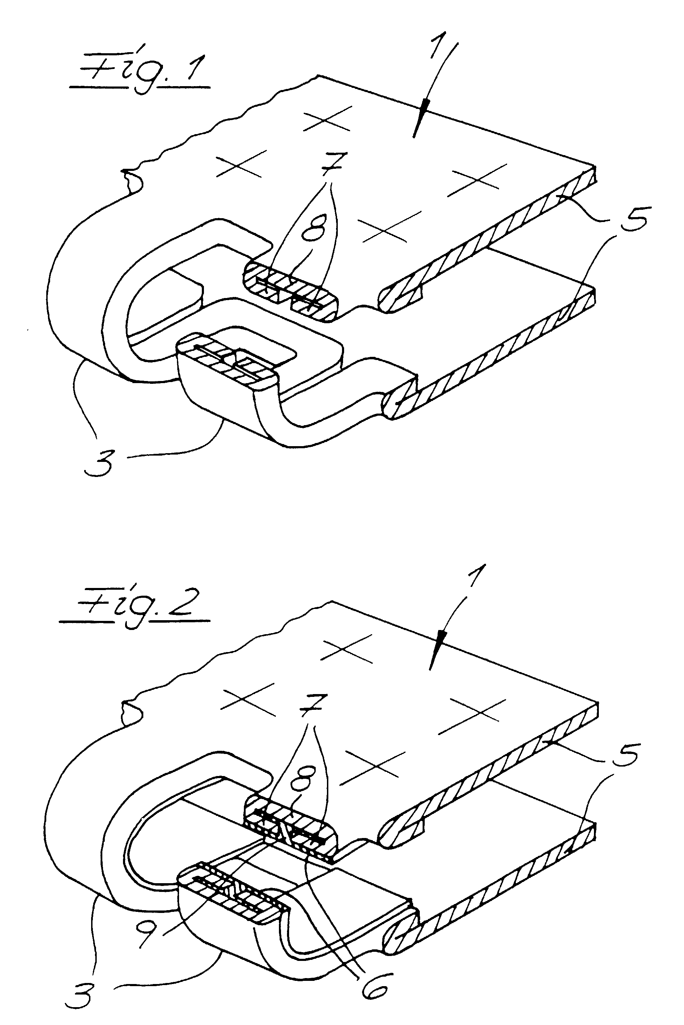

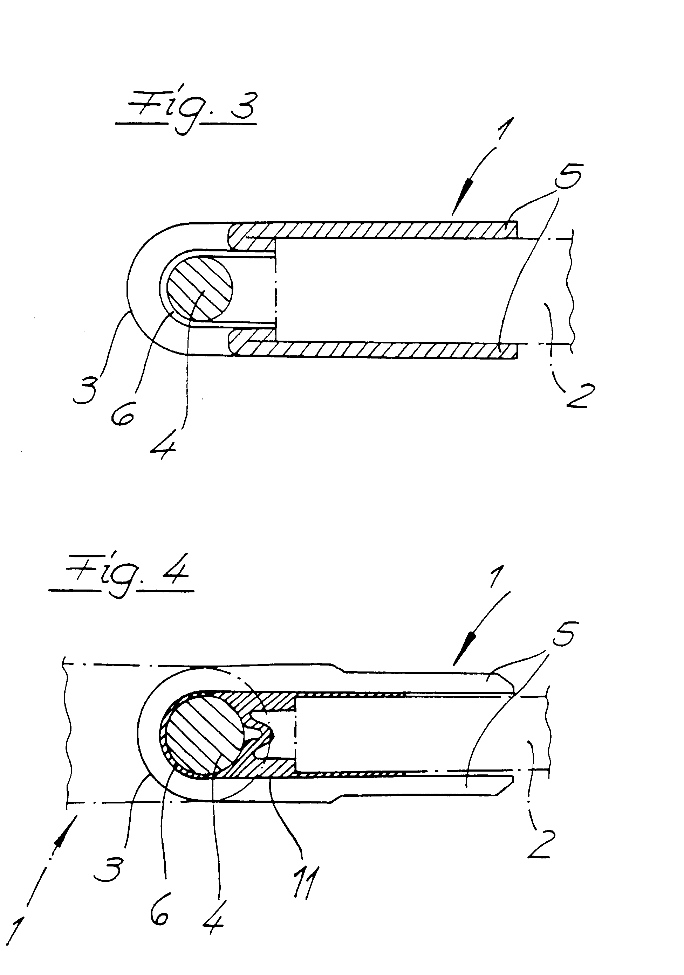

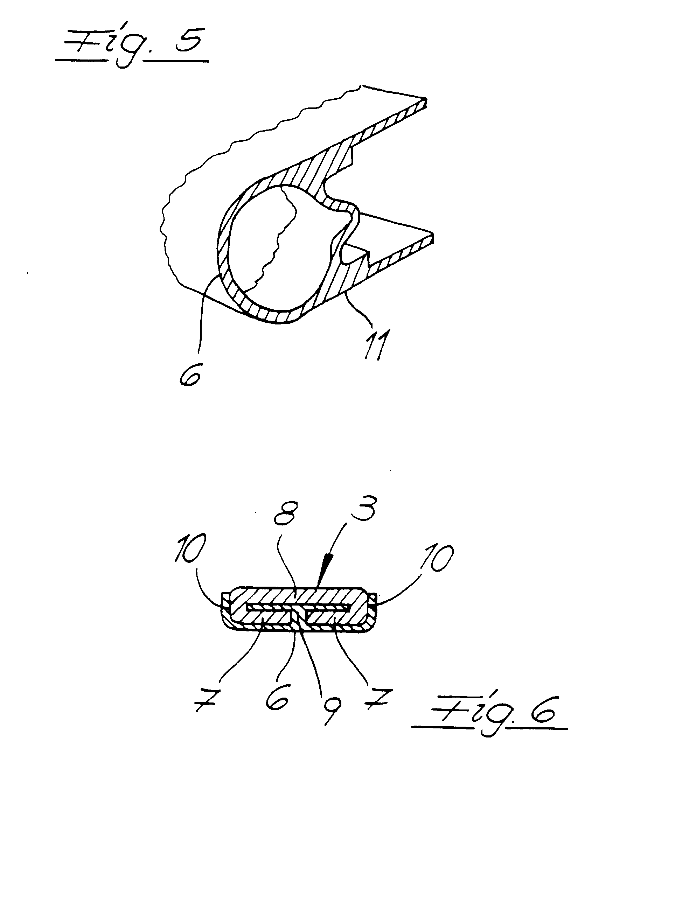

In den Figuren 1 bis 6 ist ein Riemenverbinder mit U-förmigen in Reihe angeordneten Verbinderklammern 1 zum Verbinden der Bandenden 2 von Transportbändern dargestellt. Die Verbinderklammern 1 weisen einen oder mehrere Scharnierbögen 3 zur Aufnahme eines Kupplungsstabes 4 und sich an die Scharnierbögen 3 anschließende Klammerschenkel 5 auf. Die Scharnierbögen 3 weisen zumindest auf ihrer Innenseite eine Auskleidung 6 aus Verschleißmaterial mit einem geringen Reibungskoeffizienten auf. Bei dem Ausführungsbeispiel besitzen die Scharnierbögen 3 einen flachen U-förmigen Querschnitt mit nach innen umgebogenen U-Schenkeln 7. Die Auskleidung 6 ist auf der Innenseite der Scharnierbögen 3 zwischen der U-Basis 8 und den umgebogenen U-Schenkeln 7 fixiert. Die Auskleidung 6 kann mit einem T-förmigen Ansatz 9 die U-Schenkel 7 hintergreifen und im übrigen die beiden Seitenflächen 10 der Scharnierbögen übergreifen.

Ferner besteht die Auskleidung 6 nach dem Ausführungsbeispiel aus einem Kunststoff. Sofern ein Dichtungsprofil 11 zur Abdichtung der Scharnierbögen 3 und des gemeinsamen Kupplungsstabes 4 für gelenkig ineinander greifende Scharnierbögen 3 von zwei Riemenverbindern vorgesehen ist, schließt die Auskleidung 6 der Scharnierbögen 3 an das Dichtungprofil 11 an. In diesem Zusammenhang besteht die Möglichkeit, daß die Auskleidung bzw. Auskleidungen 6 der Scharnierbögen 3 und das Dichtungsprofil 11 als einteiliges Bauteil bzw. Formteil ausgebildet sind.

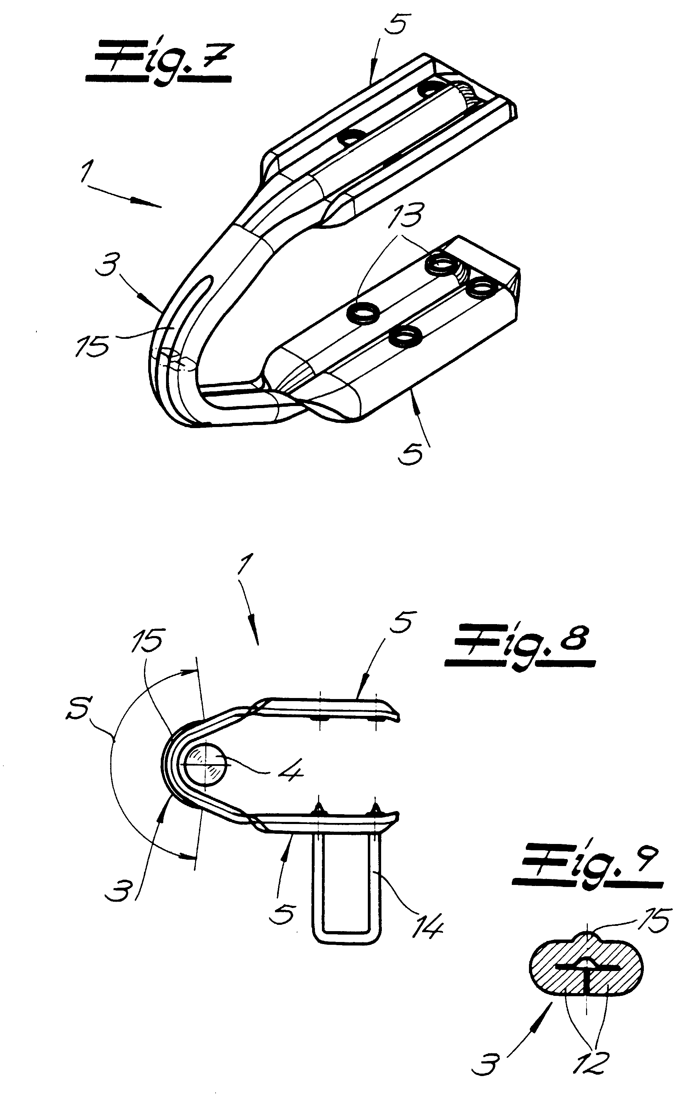

In den Figuren 7 bis 9 ist eine andere Ausführungsform des Riemenverbinders mit ebenfalls Verbinderklammern 1 und Scharnierbögen 3 dargestellt. Die Scharnierbögen 3 besitzen eine U-förmigen Querschnitt mit nach innen umgebogenen U-Schenkeln 12, die dicht bei dicht aneinander anliegen. Die Klammerschenkel 5 weisen fluchtende Durchgangslöcher 13 zum Einsetzen und Eintreiben von Befestigungskrampen 14 auf. Die Scharnierbögen 3 besitzen nach dem Ausführungsbeispiel auf ihrer Außenseite einen sich über einen vorgegebenen Bogenbereich S und folglich Biegeradius erstreckenden Verstärkungswulst 15 auf. Der Verstärkungswulst 15 ist als ein nach außen ausgeformter Wulst ausgebildet. Dadurch bleiben zwischen den Scharnierbögen 3 und dem gemeinsamen Kupplungsstab 13 stets einwandfreie Symmetrieverhältnisse unter weitgehender Reduzierung schädlicher Beanspruchungen erhalten.

## Patentansprüche

1. Riemenverbinder mit in Reihe angeordneten Verbinderklammern (1) zum Verbinden der Bandenden (2) von Transportbändern, wobei die Verbinderklammern (1) in Seitenansicht U-förmig ausgebildet sind, wobei ferner die Verbinderklammern (1) Scharnierbögen (3) und die Scharnierbögen (3) auf ihrer Innenseite eine Auskleidung (6) aus Verschleißmaterial mit einem geringen Reibungskoeffizienten aufweisen, und wobei die Scharnierbögen (3) einen flachen U-förmigen Querschnitt mit nach innen umgebogenen U-Schenkeln (7) besitzen, **dadurch gekennzeichnet,** daß die Auskleidung (6) auf der Innenseite der Scharnierbögen (3) zwischen der U-Basis (8) und den umgebogenen U-Schenkeln (7) fixiert ist.

2. Riemenverbinder nach Anspruch 1, dadurch gekennzeichnet, daß die Auskleidung (6) aus einer Metallegierung, zum Beispiel Cu-Legierung wie Bronze oder dergleichen besteht.

3. Riemenverbinder nach Anspruch 1, dadurch gekennzeichnet, daß die Auskleidung (6) aus einem Kunststoff, zum Beispiel Polytetrafluorethylen besteht.

4. Riemenverbinder nach einem der Ansprüche 1 bis 3, mit einem Dichtungsprofil zur Abdichtung der Scharnierbögen und eines gemeinsamen Kupplungstabes für gelenkig ineinandergreifende Scharnierbögen von zwei Riemenverbindern, dadurch gekennzeichnet, daß die Auskleidung (6) der Scharnierbögen (3) an das Dichtungsprofil (11) anschließt.

5. Riemenverbinder nach einem der Ansprüche 1 bis 4, dadurch gekennzeichnet, daß die Auskleidung(en) (6) und das Dichtungsprofil (11) als einteiliges Bauteil ausgebildet sind.

6. Riemenverbinder nach einem der Ansprüche 1 bis 5, dadurch gekennzeichnet, daß die Auskleidung (6) mit einem T-förmigen Ansatz (9) die nach innen umgebogenen U-Schenkel (7) der Scharnierbögen (3) hintergreift.

7. Riemenverbinder nach einem der Ansprüche 1 bis 6, dadurch gekennzeichnet, daß die Auskleidung (6) die beiden Seitenflächen (10) der Scharnierbögen (3) übergreift.

8. Riemenverbinder nach einem der Ansprüche 1 bis 7, dadurch gekennzeichnet, daß die Auskleidung (6) mittels einer Adhäsivverbindung auf der Innenfläche und ggf. auf den Seitenflächen (10) der Scharnierbögen (3) befestigt ist.

## Claims

1. A belt connector with connector clips (1), arranged in series, for connecting the belt ends (2) of conveyor belts, in which the connector clips (1) are constructed so as to be U-shaped in side view in which in addition the connector clips (1) have hinge curves (3) and the hinge curves (3) have on their inner side a lining (6) of wear material with a low coefficient of friction. and in which the hinge curves (3) have a flat U-shaped cross-section with inwardly bent U-shanks (7), characterised in that the lining (6) on the inner side of the hinge curves (3) is fixed between the U-base (8) and the bent U- arms (7).

2. A belt connector according to Claim 1, characterised in that the lining (6) consists of a metal alloy, for example Cu alloy such as bronze or the like.

3. A belt connector according to Claim 1, characterised in that the lining (6) consists of a plastic material, for example polytetrafluoroethylene.

4. A belt connector according to one of Claims 1 to 3, with a sealing section for the sealing of the hinge curves and of a common coupling rod for hinge curves of two belt connectors, which hinge curves engage into each other in an articulated manner, characterised in that the lining (6) of the hinge curves (3) adjoins the sealing section (11).

5. A belt connector according to one of Claims 1 to 4, characterised in that the lining(s) (6) and the sealing section (11) are constructed as a one-piece component.

6. A belt connector according to one of Claims 1 to 5, characterised in that the lining (6) engages with a T-shaped extension (9) behind the inwardly bent U-arms (7) of the hinge curves (3).

7. A belt connector according to one of Claims 1 to 6, characterised in that the lining (6) engages over the two side faces (10) of the hinge curves (3).

8. A belt connector according to one of Claims 1 to 7, characterised in that the lining (6) is secured by means of an adhesive connection on the inner face and if necessary on the side faces (10) of the hinge curves (3).

## Revendications

1. Attache de courroie avec des agrafes (1) disposées en série pour la liaison des extrémités de bande (1) de bandes de transport, les agrafes (1) vues de côté étant en forme de U, les agrafes (1) présentant en outre des arcs de charnière (3) et les arcs de charnière (3) présentant sur leur côté intérieur un revêtement (6) fait d'un matériau d'usure avec un faible coefficient de friction, et les arcs de charnière (3) possédant une section transversale plate en U avec des branches de U (7) repliées vers l'intérieur, caractérisée en ce que le revêtement (6) est fixé sur le côté intérieur des arcs de charnière (3), entre la base du U (8) et les branches du U (7) repliées.

2. Attache de courroie selon la revendication 1, caractérisée en ce que le revêtement (6) est fait d'un alliage métallique par exemple un alliage de cuivre tel que du bronze ou similaire.

3. Attache de courroie selon la revendication 1, caractérisée en ce que le revêtement (6) est fait d'une matière plastique, par exemple en polytétrafluoréthylène.

4. Attache de courroie selon l'une des revendications 1 à 3, avec un profilé d'étanchéité pour l'étanchéité des arcs de charnière et une barre d'accouplement commune pour des arcs de charnière s'engageant l'un dans l'autre de manière articulée de deux attaches de courroie, caractérisée en ce que le revêtement (6) des arcs de charnière (3) se rattache au profilé d'étanchéité (11).

5. Attache de courroie selon l'une des revendications 1 à 4, caractérisée en ce que le(les) revêtement(s) (6) et le profilé d'étanchéité (11) sont réalisés en un composant d'une seule pièce.

6. Attache de courroie selon l'une des revendications 1 à 5, caractérisée en ce que le revêtement (6) passe derrière les branches du U (7) recourbées vers l'intérieur des arcs de charnière (3), avec un appendice (9) en forme de T.

7. Attache de corroie selon l'une des revendications 1 à 6, caractérisée en ce que le revêtement (6) passe sur les deux faces latérales (10) des arcs de charnière (3).

8. Attache de courroie selon l'une des revendications 1 à 7, caractérisée en ce que le revêtement (6) est fixé au moyen d'une liaison adhésive sur la surface intérieure et éventuellement sur les faces latérales (10) des arcs de charnière (3).
